Europäisches Patentamt

European Patent Office

Office européen des brevets

(11) Numéro de publication : **0 329 504 B1**

(12)    **FASCICULE DE BREVET EUROPEEN**

(45) Date de publication du fascicule du brevet :
23.10.91 Bulletin 91/43

(51) Int. Cl.⁵ : **B62B 3/04**

(21) Numéro de dépôt : **89400234.4**

(22) Date de dépôt : **27.01.89**

(54) **Chariot de manutention.**

(30) Priorité : **29.01.88 FR 8801035**

(43) Date de publication de la demande :
**23.08.89 Bulletin 89/34**

(45) Mention de la délivrance du brevet :
**23.10.91 Bulletin 91/43**

(84) Etats contractants désignés :
**CH DE GB IT LI SE**

(56) Documents cités :
**EP-A- 0 174 772**
**DE-A- 3 106 027**

(56) Documents cités :
**FR-A- 2 570 655**
**PATENT ABSTRACTS OF JAPAN, vol. 11, no.
372 (M-648)[2819], 4 décembre 1987; & JP-A-62
146 709 (HITACHI LTD) 30-06-1987**

(73) Titulaire : **M I C Société Anonyme:
Zones Industrielles 1 et 2 BP. 14
F-61201 Argentan Cédex (FR)**

(72) Inventeur : **Le Gloan, André
Z.I. 1 et 2, BP 14
61201 Argentan Cedex (FR)**

(74) Mandataire : **Lefebure, Gérard et al
Office Blétry 2, boulevard de Strasbourg
F-75010 Paris (FR)**

EP 0 329 504 B1

Jouve, 18, rue Saint-Denis, 75001 PARIS

## Description

La présente invention concerne un chariot de manutention du type comprenant un châssis équipé de quatre roues de sustentation et d'une roue motrice et directrice, qui est située sensiblement entre deux des quatre roues de sustentation, lesquelles sont montées par rapport au châssis pratiquement sans suspension élastique, tandis qu'entre la roue directrice et motrice et le châssis est prévue une suspension élastique, qui presse ladite roue directrice et motrice sur le sol avec une force élastique prédéterminée et qui inclut un moyen d'actionnement apte, lorsqu'il est actionné, à modifier ladite force élastique, ledit moyen d'actionnement étant commandé par un dispositif détecteur de charge.

Il existe de nombreux modèles de chariot de manutention, avec plateau ou plate-forme de réception des charges, ou avec une fourche de saisie et de transport des charges, et avec ou sans capacité de levage et/ou de gerbage des charges. En outre, les chariots connus peuvent être à conducteur accompagnant ou à conducteur transporté. La présente invention est applicable à tous les modèles de chariot de manutention, pourvu qu'ils soient du type susindiqué. Dans les chariots de manutention de ce type, il est connu de prévoir un moyen d'actionnement permettant de modifier la force d'application et, par suite, l'adhérence de la roue directrice et motrice sur le sol, par exemple pour permettre au chariot de franchir une rampe inclinée ou de passer sur une surface lisse ou glissante (voir par exemple les demandes de brevet FR 2570655 et EP 0209502). Ledit moyen d'actionnement peut être par exemple un vérin hydraulique relié directement ou indirectement à un support de la roue motrice et directrice. Il peut être mis en fonctionnement soit par une commande manuelle actionnée par le conducteur du chariot, par exemple à l'aide d'un bouton poussoir de commande, soit automatiquement à l'aide d'un détecteur, telle qu'une jauge de contrainte, une jauge dynamométrique, un pressostat, etc. détectant une charge placée sur le plateau ou la fourche du chariot de manutention. Dans le cas où ce dernier est équipé d'un vérin de levage permettant d'abaisser et de relever le plateau ou la fourche du chariot, il est connu d'utiliser le vérin de levage lui-même comme détecteur de charge. En effet, dans ce cas, la valeur de la pression du fluide hydraulique dans le vérin de levage peut donner une indication de la présence ou de l'absence d'une charge sur le plateau ou la fourche du chariot et théoriquement aussi une indication de la valeur de la charge. Il est alors connu de brancher le vérin qui sert à modifier la force d'application de la roue motrice et directrice sur le sol, sur le même circuit hydraulique que le vérin de levage, de telle façon que le premier vérin presse la roue motrice et directrice sur le sol avec une force en rapport avec le poids de la charge porté par le chariot de manutention.

Bien que les chariots de manutention antérieurement connus du type décrit ci-dessus constituent un progrès important par rapport aux chariots de manutention dans lesquels la roue motrice et directrice est pressée contre le sol avec une force élastique constante, ils présentent néanmoins un manque de stabilité lorsque le centre de gravité de la ou des charges transportées se trouve dans un plan vertical qui est voisin des deux roues de sustentation les plus éloignées de la roue motrice et directrice. En effet, dans ce cas, comme on le verra plus en détail dans la suite de la description, il peut arriver que les deux roues de sustentation qui se trouvent de part et d'autre de la roue motrice et directrice soient soulevées au-dessus du sol lorsque le vérin hydraulique modifiant la force d'application de la roue motrice et directrice sur le sol est mis en action. Ceci peut nuire gravement à la stabilité du chariot de manutention.

La présente invention a donc essentiellement pour but de remédier à cet inconvénient, en fournissant un chariot de manutention dans lequel des moyens sont prévus pour empêcher que les deux roues de sustentation situées de part et d'autre de la roue motrice et directrice puissent se soulever au-dessus du sol lorsque le moyen d'actionnement prévu pour modifier la force d'application de ladite roue motrice et directrice sur le sol est mis en fonctionnement.

A cet effet, le chariot de manutention de la présente invention est caractérisé en ce que le dispositif détecteur de charge est disposé entre le châssis (ou un élément fixé rigidement au châssis) et un élément qui est lié à l'une des trois roues, à savoir la roue motrice et directrice et les deux roues situées de part et d'autre de celle-ci, et qui se trouve à une distance verticale fixe par rapport au sol.

Le moyen d'actionnement peut être constitué, de façon connue, par un vérin hydraulique qui peut être alimenté en fluide hydraulique à partir d'une pompe hydraulique reliée mécaniquement à un moteur électrique. Le dispositif détecteur de charge peut être constitué par un simple contacteur ou il peut être constitué par un moyen de commutation commandé par un capteur sensible à une force de compression. Si le chariot de manutention est équipé d'un vérin hydraulique de levage, ce dernier et le vérin formant le moyen d'actionnement peuvent être alimentés en fluide hydraulique sous pression par des pompes hydrauliques respectives ou par la même pompe. Dans le premier cas, le moyen de commutation du dispositif détecteur de charge peut être connecté électriquement dans le circuit d'alimentation en courant du moteur électrique associé à la pompe hydraulique servant à alimenter en fluide hydraulique le vérin formant ledit moyen d'actionnement. Dans le second cas, ledit moyen de commutation peut être connecté électriquement dans le circuit d'alimentation en courant d'une électrovanne branchée hydrauliquement entre la pompe hydraulique commune et le vérin formant ledit moyen d'actionnement.

D'autres caractéristiques et avantages de la présente invention apparaîtront au cours de la description qui va suivre de diverses formes d'exécution de l'invention données en référence aux dessins annexés sur lesquels :

la figure 1 montre, en élévation latérale, un chariot de manutention, du type appelé transpalette, à conducteur accompagnant, dans lequel la présente invention peut être mise en oeuvre, certaines parties du chariot ayant été arrachées pour mieux montrer certains détails.

La figure 2 est un schéma mécanique et hydraulique montrant une première forme d'exécution de la présente invention.

La figure 3 montre une variante de réalisation d'une partie du schéma de la figure 2.

La figure 4 montre une autre variante de réalisation d'une autre partie du schéma de la figure 2.

La figure 5 est le schéma d'un circuit électrique utilisable en liaison avec le schéma de la figure 2 ou de la figure 4.

La figure 6 est un schéma d'un autre circuit électrique utilisable en liaison avec le schéma de la figure 2 ou de la figure 4.

La figure 7 est un schéma semblable à celui de la figure 2, montrant une autre forme d'exécution de la présente invention.

La figure 8 est le schéma d'un circuit électrique utilisable avec le schéma de la figure 7.

La figure 9 montre, en partie en élévation de face et en partie en coupe verticale, une forme concrète d'exécution du train de roues avant d'un chariot de manutention conforme à la présente invention.

La figure 10 est un schéma électrique relatif à une autre forme d'exécution de la présente invention.

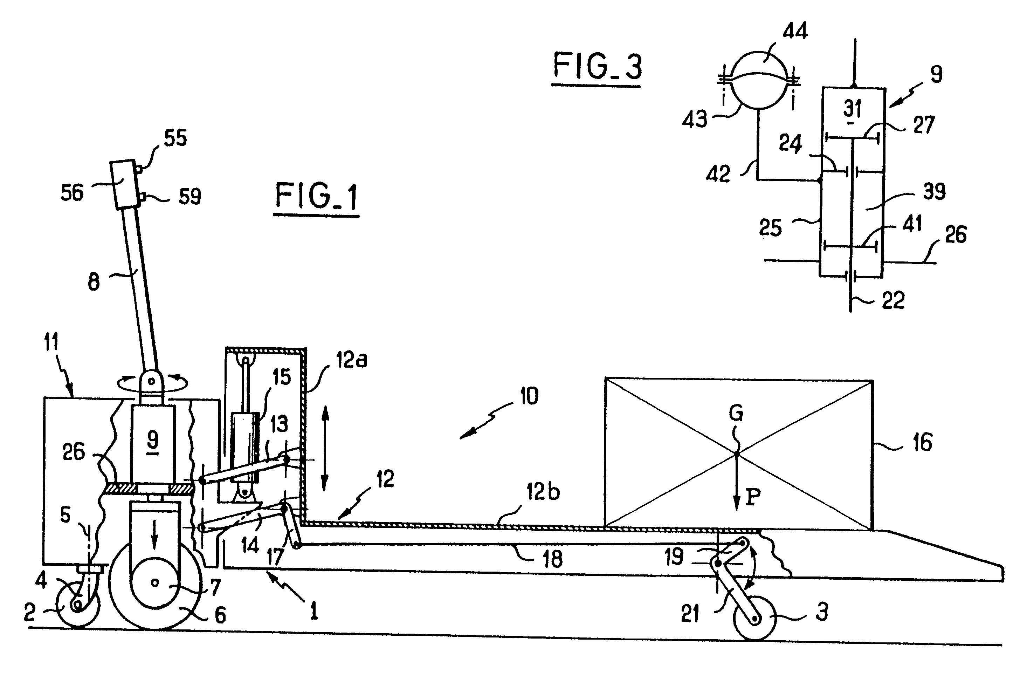

La figure 1 montre, à titre d'exemple, un chariot de manutention connu 10, du genre appelé transpalette, à conducteur accompagnant, dans lequel la présente invention peut être mise en oeuvre. Le chariot 10 comprend un châssis 1 équipé de quatre roues de sustentation, à savoir deux roues folles avant 2 et deux roues arrière 3. Les roues avant 2 sont montées dans des supports ou chapes 4 pouvant tourner librement autour d'axes verticaux 5. Aucune suspension élastique n'est interposée entre le châssis 1 et les roues 2 et 3, c'est-à-dire qu'il n'y a entre le châssis 1 et les roues 2 et 3 aucun élément susceptible de se déformer sensiblement élastiquement et d'autoriser un déplacement vertical relatif entre le châssis 1 et l'une quelconque des roues 2 et 3.

Sensiblement entre les deux roues avant 2 se trouve une roue motrice et directrice 6, qui peut être entraînée en rotation par un moteur électrique ou hydraulique 7 et qui peut être orientée à volonté par un conducteur accompagnant au moyen d'un timon de manoeuvre 8, pour diriger le chariot 10. La roue 6 est pressée contre le sol par une force élastique prédéterminée qui peut être modifiée par un moyen d'actionnement, par exemple par un vérin hydraulique 9.

Le châssis 1 peut comprendre un châssis principal 11, sous lequel sont montées les deux roues avant 2 et la roue 6, et un châssis auxiliaire 12, qui s'étend vers l'arrière à partir du châssis principal 11 et sous lequel sont montées les deux roues arrière 3. Le châssis auxiliaire 12 est monté verticalement mobile par rapport au châssis principal 11. Par exemple, sa partie avant 12a est reliée au châssis principal 11 par deux biellettes supérieures 13 et par deux biellettes inférieures 14 (une seule biellette 13 et une seule biellette 14 sont visibles dans la figure 1). Au moins un vérin hydraulique de levage 15 est monté entre le châssis principal 11 et la partie 12a du châssis auxiliaire 12 pour déplacer ce dernier verticalement. La partie 12b du châssis auxiliaire 12, qui s'étend horizontalement vers l'arrière, est destinée à supporter une ou plusieurs charges 16. La partie 12b peut avoir, de façon connue, soit la forme d'un plateau, soit la forme d'une fourche, et elle peut être soulevée et abaissée en même temps que la partie 12a. En effet, chacune des deux biellettes inférieures 14 est constituée par l'une des deux branches d'un levier pivotant coudé, dont l'autre branche 17 est reliée par une bielle 18 à l'une 19 des deux branches d'un autre levier pivotant coudé, dont l'autre branche 21 porte, à son extrémité libre, l'une des deux roues arrière 3.

En service, que la charge 16 soit unitaire ou divisée, il peut arriver que son centre de gravité G se trouve dans la région des deux roues arrière 3. Dans ces conditions, les roues arrière 3 supportent, en plus d'une fraction du poids propre du chariot 10, la totalité ou la quasi totalité du poids P de la charge 16, tandis que les roues avant 2 supportent presque uniquement la fraction restante du poids propre du chariot 10. Autrement dit, dans la situation indiquée plus haut, quelle que soit la valeur du poids P de la charge 16, cette dernière n'apporte pratiquement aucun poids supplémentaire sur les roues avant 2.

D'un autre côté, la suspension élastique qui presse la roue 6 sur le sol exerce sur le châssis principal 11, du fait de la réaction du sol, une force qui est dirigée verticalement de bas en haut et qui tend à soulever le châssis principal 11. Il en résulte que si, dans la situation évoquée plus haut, le conducteur accompagnant actionne le vérin hydraulique 9 afin d'augmenter la pression exercée par la roue 6 sur le sol, afin d'augmenter l'adhérence de ladite roue, il peut arriver que le châssis principal 11 et, par suite, les roues avant 2 soient effectivement soulevés au-dessus du sol. Il faut en effet savoir que les chariots du genre de celui représenté sur la figure 1 ont un poids propre relativement faible (souvent nettement plus faible que le poids de la charge qu'ils sont capables de transporter). En conséquence, lorsque le vérin hydraulique 9 est actionné, la force qui est appliquée par réaction au châssis principal 11 et qui est dirigée verticalement de bas en haut peut devenir plus grande que la fraction du poids propre du chariot 10 qui tend à maintenir les roues avant 2 en contact avec le sol, de sorte que le châssis principal 11 et les roues avant 2 se soulèvent au-dessus du sol. Dans cette situation, le chariot 10 est privé des éléments de stabilité que constituaient les deux roues avant 2. Il en résulte que la stabilité générale du chariot 10 peut être gravement compromise au détriment de la sécurité des personnes et des biens qui se trouvent sur le chariot ou à proximité de celui-ci lorsqu'il circule dans de telles conditions.

Le risque que les roues avant 2 se soulèvent au-dessus du sol est encore agravé lorsque le chariot comporte un vérin hydraulique de levage 15 comme le chariot 10 de la figure 1, et que le vérin hydraulique 9 est alimenté en fluide hydraulique à partir du même circuit hydraulique que le vérin hydraulique de levage 15, de telle façon que la pression dans le vérin 9 soit proportionnelle au poids de la charge transportée. En effet, dans ce cas, sous l'effet du poids P, la réaction du sol sur les roues 3 tend à faire pivoter les leviers coudés 19, 21 dans le sens contraire des aiguilles d'une montre (en regardant la figure 1), ce qui comprime longitudinalement les bielles 18 y associées. A leur tour, les bielles 18 tendent à faire pivoter les leviers coudés 14, 17 dans le sens des aiguilles d'une montre, ce qui tend d'une part à soulever le châssis principal 11 et, d'autre part, à comprimer davantage le fluide hydraulique contenu dans le vérin hydraulique de levage 15. De cette disposition, il apparaît clairement que si la pression du fluide hydraulique dans le vérin 9 est indexée sur la pression du fluide hydraulique régnant dans le vérin de levage 15, pour appliquer la roue 6 fortement sur le sol en fonction du poids de la charge 16, un tel système aura pour effet, par réaction, d'inciter le châssis principal 11 et, par suite, les roues avant 2 à se soulever au-dessus du sol.

L'invention permet d'éviter cela en prévoyant un détecteur de charge qui est disposé entre le châssis principal 11 et un élément qui est lié à l'une des deux roues avant 2 ou à la roue 6 et qui se trouve à une distance verticale fixe par rapport au sol. Comme on le verra plus loin, le détecteur de charge peut être réalisé sous différentes formes.

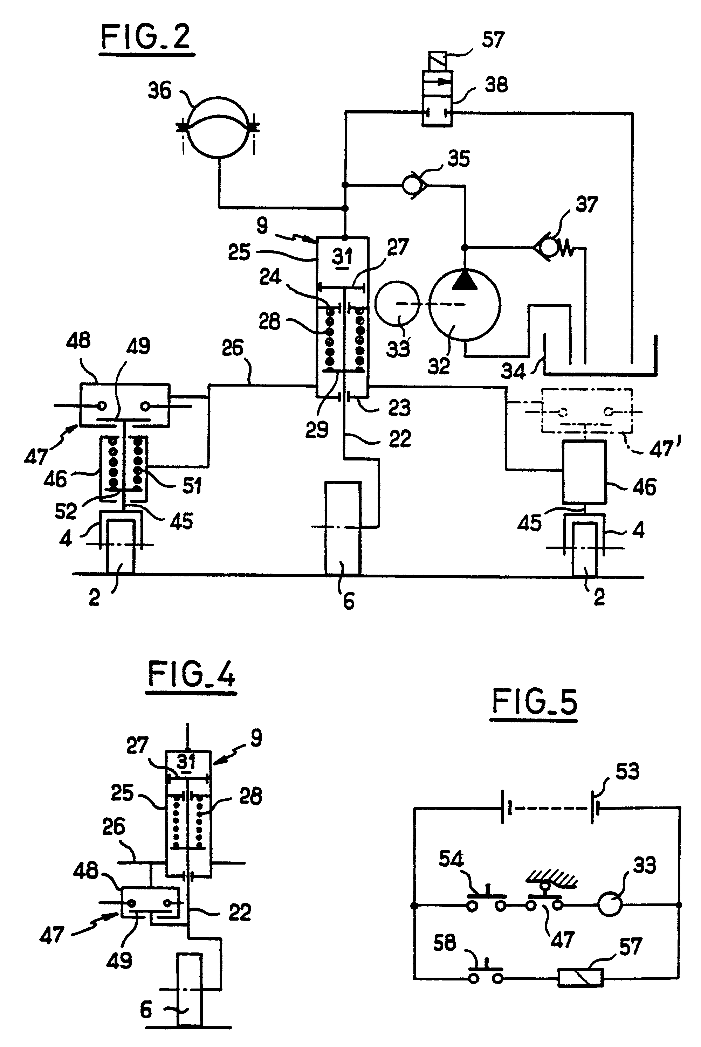

Le chariot de manutention de la présente invention peut avoir une structure générale semblable à celle du chariot 10 de la figure 1. La figure 2 montre, de façon schématique, une première forme d'exécution de la présente invention. Dans la figure 2, les éléments qui sont identiques ou qui jouent le même rôle qui ceux de la figure 1 sont désignés par les mêmes numéros de référence.

La figure 2, montre de face les deux roues avant 2 et la roue motrice et directrice 6 avec son pivot vertical 22. Le pivot 22 peut glisser axialement dans deux bagues de guidage 23 et 24 fixées dans un fût cylindrique 25 qui forme le cylindre du vérin hydraulique 9. Le fût cylindrique 25 est supporté par une traverse 26 qui fait partie du châssis principal 11 (figure 1). Comme on le verra plus loin, le fût cylindrique est supporté par la traverse 26 de manière à pouvoir tourner par rapport à celle-ci autour d'un axe vertical, mais sans pouvoir se déplacer axialement, donc sans possibilité de mouvement dans le sens vertical. A l'extrémité supérieure du pivot 22 est fixé un piston 27 qui peut coulisser dans le fût cylindrique 25, dans la partie de celui-ci qui se trouve au-dessus de la bague 24, de manière à former avec ladite partie du fût cylindrique 25 le vérin hydraulique 9.

Un ressort hélicoïdal le compression 28, prenant appui à une extrémité contre la bague 24 et à son autre extrémité contre un épaulement 29 du pivot 22, presse la roue 6 sur le sol avec une force élastique prédéterminée. Ladite force peut être augmentée en envoyant un fluide hydraulique sous pression dans la chambre 31 du vérin hydraulique 9 au moyen d'une pompe 32. Quand la pompe 32 est entraînée par un moteur électrique 33, elle aspire le fluide hydraulique dans un réservoir 34 et le refoule à travers un clapet anti-retour 35 à la fois vers la chambre 31 et vers un accumulateur de pression 36. Ce dernier permet au ressort 28 de continuer à jouer un rôle de suspension élastique même quand la chambre 31 est remplie de fluide hydraulique sous pression. En cas de surpression accidentelle dans le circuit hydraulique, un limiteur de pression 37 permet de renvoyer le fluide hydraulique vers le réservoir 34.

La force supplémentaire, qui est dûe au fluide hydraulique sous pression contenu dans la chambre 31 et qui s'ajoute à la force du ressort 28 pour presser la roue 6 sur le sol, peut être annulée en actionnant une électrovanne 38 qui, lorsqu'elle est ouverte, permet l'évacuation vers le réservoir 34 du fluide hydraulique contenu dans la chambre 31 et dans l'accumulateur 36.

Le ressort 28 peut être remplacé par un volume d'huile enfermé dans la chambre 39 du fût cylindrique 25, entre la bague 24 et un piston 41 fixé au pivot 22, la chambre 39 étant raccordée par un tuyau 42 à un autre accumulateur de pression 43, comme montré dans la figure 3. La chambre 44 de l'accumulateur 43 est gonflée à une pression de gaz prédéterminée pour que la roue 6 soit pressée sur le sol avec une force prédéterminée.

Comme montré dans la figure 2, la chape de support 4 de chacune des deux roues avant 2 est pourvue d'un pivot vertical 45 monté à rotation dans un boîtier 46. Les deux boîtiers 46 sont fixés rigidement respectivement aux extrémités de la traverse 26.

Suivant une forme d'exécution de la présente invention, le dispositif détecteur de charge susmentionné peut comprendre un contacteur 47, dont le boîtier 48 est fixé rigidement à la traverse 26 et dont le contact mobile 49 est relié fonctionnellement au pivot 45 de l'une des deux roues avant 2, par l'intermédiaire de l'organe de manoeuvre (levier ou bouton-poussoir non montré dans le schéma de la figure 2) du contacteur 47. Si on le désire, un autre contacteur 47' (montré en trait mixte dans la figure 2) peut être aussi associé au pivot 45 de l'autre roue avant 2, suivant une disposition semblable à celle du contacteur 47. Suivant une variante d'exécution, le contact mobile 49 du contacteur 47 peut être relié fonctionnellement au pivot 22 de la roue 6 comme montré dans la figure 4.

Un ressort 51 ayant un faible débattement dans le sens vertical est interposé entre la paroi d'extrémité supérieure du boîtier 46 et un épaulement 52 du pivot 45 de la roue avant 2 montrée dans la partie gauche de la figure 2. De préférence, l'autre boîtier 46, montré dans la partie droite de la figure 2, contient aussi un ressort semblable au ressort 51 et prenant appui sur un épaulement, semblable à l'épaulement 52, du pivot 45 de l'autre roue avant 2. Comme les deux épaulement 52 se trouvent à une distance verticale fixe par rapport au sol, les deux ressorts 51 tendent à repousser vers le haut les boîtiers 46 et la traverse 26 avec le boîtier 48 du contacteur 47. De préférence, la force du ou des ressorts 51 est choisie de telle façon que le contacteur 47 (et aussi le contacteur 47' lorsqu'il est prévu) est ouvert quand il n'y a aucune charge sur la surface de réception de charge 12b du chariot 10 (figure 1), et fermé quand le ou les ressorts 51 sont comprimés par suite de la présence d'une charge sur ladite surface de réception 12b.

Contrairement à ce que pourrait laisser penser la représentation très schématique de la figure 2, le ou les ressorts 51 ne doivent pas être considérés comme formant une suspension élastique pour la ou les roues avant 2. En réalité, l'agencement est tel que l'amplitude du mouvement relatif vertical qui est permis par chaque ressort 51 entre le boîtier 46 et le pivot 45 correspondant, est très faible (environ 1 à 3 mm) et correspond à la course d'ouverture et de fermeture des contacts du contacteur 47.

Comme montré dans la figure 5, une batterie 53 fournit l'énergie électrique pour l'alimentation en courant du moteur électrique 33. Le contacteur 47 est connecté électriquement en série avec le moteur 33. On notera que, dans le cas où il est prévu deux contacteurs 47 et 47', ceux-ci sont de préférence connectés électriquement tous les deux en série avec le moteur 33, de telle façon que celui-ci ne puisse être alimenté en courant que quand les deux contacteurs 47 et 47' sont fermés. Comme montré dans la figure 5, un interrupteur 54 peut être également connecté en série avec le contacteur 47 et le moteur 33. L'interrupteur 54 peut être actionné au moyen d'un bouton de commande 55 prévu sur la poignée 56 du timon 8 (figure 1). Comme cela est également montré dans la figure 5, la batterie 53 fournit un courant d'excitation au solénoïde 57 de l'électrovanne 38 (figure 2) quand un interrupteur 58 est fermé. L'interrupteur 58 peut être actionné par exemple au moyen d'un bouton de commande 59 également prévu sur la poignée 56 du timon de manoeuvre 8.

On décrira maintenant le fonctionnement du système. Quand aucune charge n'est présente sur la surface de réception 12b du chariot 10, le contacteur 47 est ouvert. Il en résulte que, même si le conducteur du chariot agit sur le bouton de commande 55 pour fermer l'interrupteur 54, le moteur 33 ne peut pas être alimenté en courant et, par suite, la chambre 31 du vérin hydraulique 9 ne peut pas être remplie de fluide hydraulique sous pression. En conséquence, aucune pression n'est exercée sur la paroi supérieure de la chambre 31, pression qui pourrait, autrement, provoquer le soulèvement du fût cylindrique 25 et de la traverse 26 et, par suite, le soulèvement des roues avant 2 au-dessus du sol.

Quand une charge 16 est présente sur la surface de réception 12b du chariot 10, deux situations peuvent se présenter. Dans une première situation, la fraction du poids de la charge qui est rapportée sur la traverse 26 est insuffisante pour comprimer le ou les ressorts 51 et pour provoquer la fermeture du ou des contacteurs 47 et 47'. Une telle situation pourra par exemple se produire soit parce que le poids de la charge 16 est trop faible, soit parce que le centre de gravité G de la charge se trouve dans la région des roues arrière 3. Dans cette première situation, le fonctionnement du système est semblable à celui décrit plus haut en l'absence de charge sur la surface de réception 12b. Aucun fluide hydraulique sous pression ne peut être alors admis dans la chambre 31, de sorte qu'il n'y a pas de risque que les roues avant 2 soient soulevées au-dessus du sol.

Dans la seconde situation, la fraction du poids de la charge 16 qui est rapportée sur la traverse 26 est suffisante pour comprimer le ou les ressorts 51 et pour provoquer la fermeture du ou des contacteurs 47 et 47'. Si, dans cette seconde situation, le conducteur décide que la pression de la roue 6 sur le sol doit être augmentée, par exemple pour que le chariot 10 puisse franchir plus aisément une rampe ou une zone glissante, le conducteur fermera l'interrupteur 54 en appuyant sur le bouton 55. Dans ces conditions, le moteur électrique 33 sera alimenté en courant en entraînera la pompe 32. Cette dernière, puisant le fluide hydraulique dans le réservoir 34, le refoulera dans la chambre 31. Quand la pression du fluide hydraulique dans la chambre 31 atteint une valeur telle que la force exercée par le fluide hydraulique sur la paroi supérieure de la chambre 31 et dirigée de bas en haut dépasse la force, dirigée de haut en bas, correspondant à la fraction du poids de la charge qui est appliquée à la traverse et qui a provoqué la fermeture du ou des contacteurs 47 et 47', ce ou ces contacteurs s'ouvrent. Le moteur 33 n'est alors plus alimenté en courant et la pompe 32 s'arrête. Le clapet anti-retour 35 se ferme et la pression du fluide hydraulique dans la chambre 31 reste à la valeur atteinte au moment de l'ouverture du ou des contacteurs 47 et 47'.

D'après ce qui précède, il ressort que avec l'arrangement du détecteur de charge conforme à la présente invention, la pression du fluide hydraulique dans la chambre 31 ne peut pas atteindre une valeur telle que le fût cylindrique 25 et la traverse 26 soient soulevés à un point tel que les roues avant 2 soient elles-mêmes soulevés au-dessus du sol. Il en résulte que les risques d'instabilité que l'on rencontrait avec les chariots antérieurement connus, sont éliminés.

Quand le conducteur du chariot décide d'annuler la force additionnelle, qui est due au fluide hydraulique sous pression dans la chambre 31 et qui s'ajoute à la force du ressort 28 pour presser la roue 6 sur le sol, il suffit qu'il ferme l'interrupteur 58 en appuyant sur le bouton 59. Dans ces conditions, le solénoïde 57 est excité et l'électrovanne 38 autorise l'évacuation du fluide hydraulique contenu dans la chambre 31 et dans l'accumulateur 36 vers le réservoir 34.

Le système décrit en liaison avec les figures 2 à 5 fonctionne indépendamment du fait que le châssis 1 du chariot 10 est constitué par un unique ensemble rigide ou par deux parties 11 et 12 dont l'une (12) est verticalement mobile par rapport à l'autre partie 11. En conséquence, l'invention, telle qu'elle a été décrite plus haut, s'applique aussi bien à un chariot dont le châssis est constitué par un unique ensemble rigide, qu'à un chariot dont le châssis 1 est constitué par deux parties 11 et 12 comme celles montrées dans la figure 1.

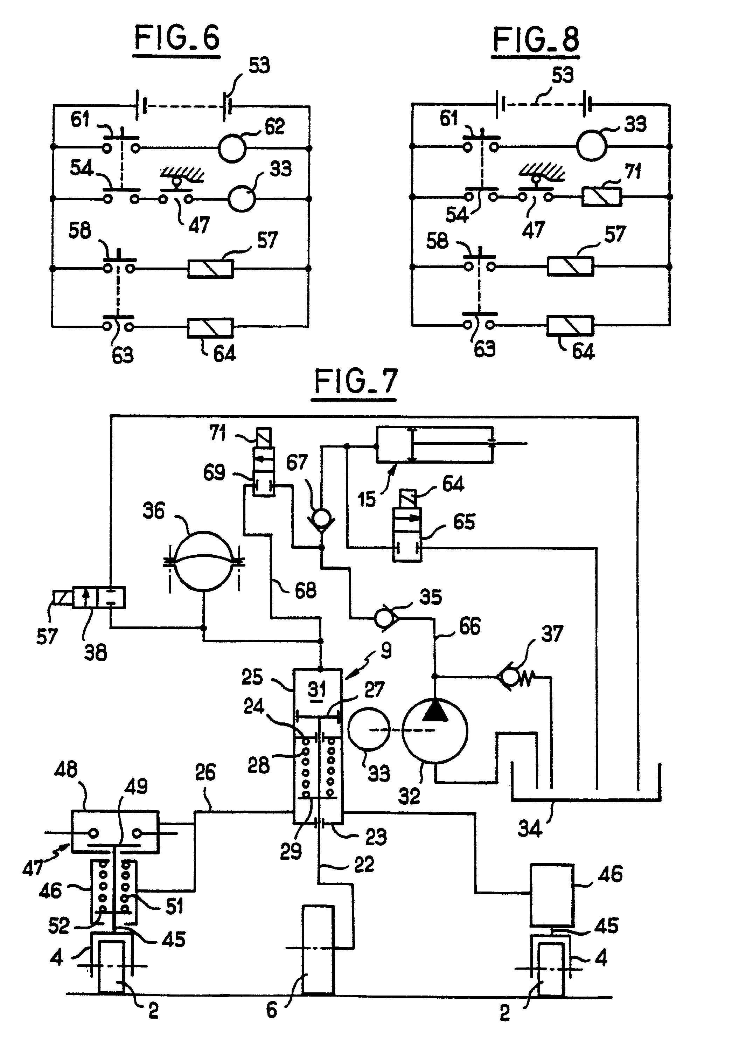

Dans le cas où le châssis 1 du chariot 10 est constitué par deux parties 11 et 12, dont la partie 12 peut être déplacée verticalement par rapport à la partie 11 au moyen d'au moins un vérin hydraulique 15, et dans le cas où les vérins hydrauliques 9 et 15 sont alimentés en fluide hydraulique respectivement par deux pompes ayant chacune son propre moteur électrique d'entraînement, le schéma de la figure 5 peut être complété comme montré sur la figure 6. Dans la figure 6, les éléments qui sont identiques à ceux de la figure 5 ou qui jouent le même rôle, sont désignés par les mêmes numeros de référence. Dans la figure 6, le numéro 61 désigne un interrupteur qui, quand il est fermé, provoque l'alimentation en courant du moteur électrique 62 qui entraîne la pompe hydraulique associée au vérin hydraulique de levage 15. L'interrupteur 61 est couplé mécaniquement avec l'interrupteur 54 et les deux interrupteurs peuvent être actionnés par le bouton de commande 55 prévu sur la poignée 56 du timon de manoeuvre 8 (figure 1). Un autre interrupteur 63 est couplé mécaniquement avec l'interrupteur 58, ces deux interrupteurs pouvant être actionnés en même temps au moyen du bouton de commande 59 prévu sur la poignée 56. Quand il est fermé, l'interrupteur 63 provoque l'excitation d'un solénoïde 64. Le solénoïde 64 commande une électrovanne 65 (figure 7) qui est normalement fermée au repos et qui, quand elle est actionnée par le solénoïde 64, autorise, l'évacuation du fluide contenu dans le vérin hydraulique de levage 15 vers le réservoir 34.

Quand la surface de réception de charge 12b, constituée par exemple par une fourche, est en position basse (la tige du piston du vérin 15 étant rétractée), et quand les branches de la fourche 12b sont engagées sous une charge à transporter, par exemple une charge portée par une palette, le conducteur appuie sur le bouton de commande 55. Alors, les deux interrupteurs 61 et 54 se ferment, provoquant ainsi l'alimentation en courant électrique du moteur 62. Par contre, le moteur 33 reste non alimenté tant qu'aucune charge n'est appliquée à la traverse 26 et que le contacteur 47 reste ouvert. En conséquence, dans un premier temps, seul le vérin hydraulique de levage 15 est alimenté en fluide hydraulique et soulève la fourche 12b du chariot 10. Quand la fourche 12b du chariot 10 vient saisir la charge et que, de ce fait, une partie du poids de la charge est appliquée à la traverse 26 et provoque la fermeture du contacteur 47, le moteur électrique 33 est alors alimenté en courant, de sorte que le vérin hydraulique 9 est également alimenté en fluide hydraulique pour presser plus fortement la roue 6 sur le sol. Comme dans le mode de réalisation décrit précédemment, quand la pression du fluide dans le vérin hydraulique 9 atteint une valeur telle que la force exercée par le fluide hydraulique sur la paroi supérieure de la chambre 31 du vérin 9 devient légèrement plus grande que la force antagoniste, due à la charge, qui a provoqué la fermeture du contacteur 47, ce dernier contacteur s'ouvre, de sorte que le vérin hydraulique 9 cesse d'être alimenté en fluide hydraulique et que la pression dans la chambre 31 reste à la valeur atteinte au moment de l'ouverture du contacteur 47. Dans ce cas aussi, on est donc assuré que la pression du fluide hydraulique dans le vérin 9 ne pourra pas atteindre un niveau tel que les roues avant 2 soient soulevées au-dessus du sol. On notera que, dans cette forme d'exécution, la force additionnelle appliquée à la roue 6 pour augmenter son adhérence sur le sol est produite automatiquement au moment où la fourche 12b du chariot 10 saisit la charge 16, à la condition que la fraction du poids de la charge qui est rapportée à ce moment sur la traverse 26 soit suffisante pour provoquer la fermeture du contacteur 47. De même, ladite force additionnelle est automatiquement annulée quand la charge 16 est abaissée. En effet, quand le conducteur appuie sur le bouton de commande 59, les deux interrupteurs 58 et 63 se ferment, les solénoïdes 57 et 64 sont excités et les électrovannes 38 et 65 autorisent le retour vers le réservoir 34 du fluide hydraulique contenu dans le vérin 15 et dans chambre 31 du vérin 9.

Les figures 7 et 8 montrent les modifications à apporter respectivement au schéma des figures 2 et 6 quand les vérins hydrauliques 9 et 15 sont alimentés en fluide hydrauliques par une seule et même pompe hydraulique, par example la pompe 32 avec son moteur électrique d'entraînement 33. Comme montré dans la figure 7, la pompe 32 alimente le vérin de levage 15 par un tuyau 66 dans lequel sont insérés deux clapets anti-retour, à savoir le clapet 35 et un autre clapet 67. Un tuyau 68 est branché en dérivation sur le tuyau 66 entre les clapets 35 et 67, et il conduit le fluide hydraulique en provenance de la pompe 32 vers la chambre 31 du vérin 9 et vers l'accumulateur de pression 36. Dans le tuyau 68 est insérée une électrovanne 69, dont le solénoïde 71 est connecté électriquement en série avec le contacteur 47 et avec l'interrupteur 54 comme montré dans la figure 8. Comme le montre également la figure 8, le moteur électrique 33 d'entraînement de la pompe 32 est connecté en série avec l'interrupteur 61. L'électrovanne 38 est reliée hydrauliquement au tuyau 68 en aval de l'électrovanne 69, tandis que l'électrovanne 65 est reliée hydrauliquement au tuyau 66 en aval du clapet anti-retour 67.

Dans la forme d'exécution des figures 7 et 8, le moteur électrique 33 est alimenté en courant dès que le bouton de commande 55 est enfoncé, provoquant ainsi l'alimentation du vérin de levage 15 en fluide hydraulique à travers les clapets 35 et 67. Par contre, tant que la fourche 12b du chariot 10 n'a pas saisi une charge et tant que la fraction du poids de la charge rapportée sur la traverse 26 n'a pas provoqué la fermeture du contacteur 47, le solénoïde 71 n'est pas excité, l'électrovanne 69 reste fermée et la chambre 31 du vérin 9 n'est pas alimentée en fluide hydraulique. Dès que la charge appliquée à la traverse 26 devient suffisante, le contacteur 47 se ferme, provoquant ainsi l'ouverture de l'électrovanne 69. A partir de ce moment, une partie du fluide hydraulique débitée par la pompe 32 est prélevée par le tuyau 68 pour remplir l'accumulateur de pression 36 et la chambre 31 du vérin 9. Quand la pression du fluide hydraulique dans la chambre 31 atteint une valeur suffisante pour provoquer, par réaction, le soulèvement de la traverse 26, le contacteur 47 s'ouvre et, le solénoïde 71 n'étant plus excité, l'électrovanne 69 se ferme. La pression du fluide hydraulique dans la chambre 31 garde alors la valeur atteinte au moment de l'ouverture du contacteur 47, pour appliquer une force additionnelle à la roue 6 et augmenter l'adhérence de celle-ci sur le sol, tant que l'électrovanne 38 reste fermée. Comme dans la forme d'exécution de la figure 6, ladite force additionnelle est annulée en ouvrant l'électrovanne 38, quand le conducteur appuie sur le bouton 59 pour commander l'abaissement de la fourche 12b du chariot 10 et de la charge qu'elle supporte.

Là encore, on voit que dans la forme d'exécution des figures 7 et 8, la pression du fluide hydraulique dans la chambre 31 du vérin 9 ne peut pas atteindre une valeur telle que les roues avant 2 soient soulevées au dessus du sol et qui, par suite, provoqueraient une perte de stabilité du chariot 10.

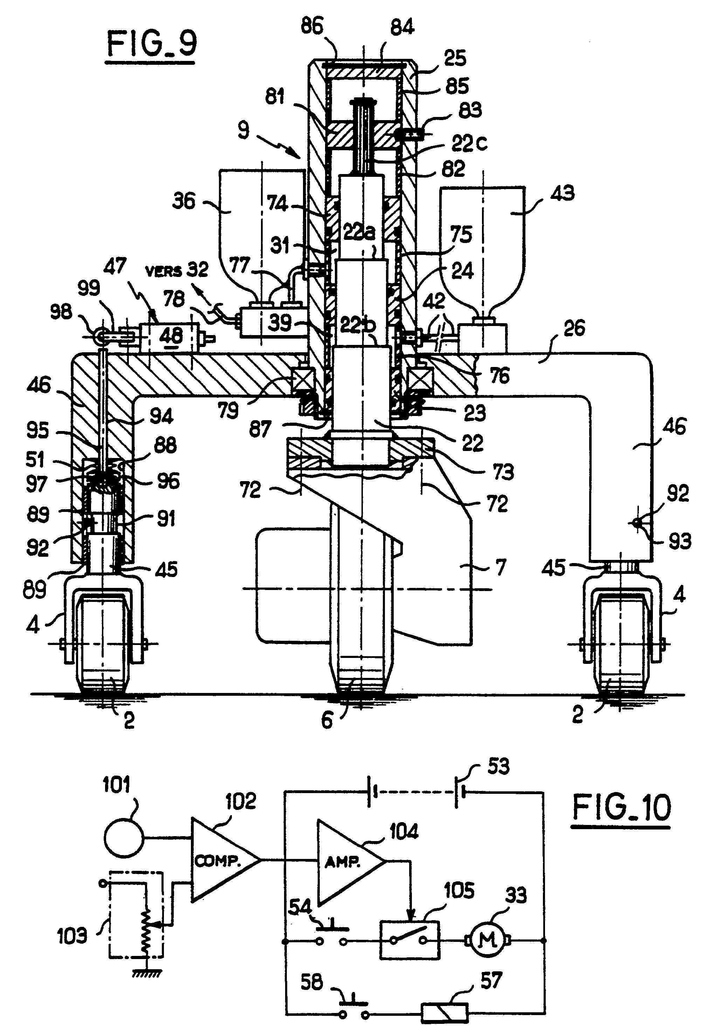

La figure 9 montre une forme concrète d'exécution du train de roues avant 2, 6 du chariot. Comme montré dans la figure 9, le carter de l'ensemble moteur-réducteur 7 d'entraînement de la roue motrice et directrice 6 est fixé par des boulons 72 à une bride 73 qui est soudée à l'extrémité inférieure du pivot 22. Ce dernier est constitué par un arbre ayant un profil étagé, avec des épaulements 22a et 22b dont les surfaces jouent le même rôle que les surfaces actives des pistons 27 et 41 de la figure 3. Le pivot 22 est monté axialement glissant dans des bagues 23, 24 et 74, qui sont convenablement maintenues espacées axialement les unes des autres dans le fût cylindrique 25 par des segments de tube 75 et 76 de manière à former entre elles les chambres 31 et 39. La chambre 31 est reliée par un tuyau 77 à l'accumulateur de pression 36 et ce dernier est relié par un tuyau 78 à la pompe 32 (non montrée dans la figure 9). La chambre 39 est reliée par le tuyau 42 à l'accumulateur de pression 43. Le fût cylindrique 25 est monté à rotation, sans possibilité de mouvement axial, dans un trou central de la traverse 26 par l'intermédiaire d'un roulement à bille 79. A son extrémité supérieure, au-delà de la bague 74, le pivot 22 est prolongé par un bout d'arbre cannelé 22c qui est monté coulissant dans le trou central d'une bague 81 ayant des cannelures intérieures correspondant à celles de l'arbre cannelé 22c. La bague 81 est maintenue espacée axialement de la bague 74 par un segment de tube 82 et elle est fixée rigidement au fût cylindrique 25 par au moins une vis 83. A son extrémité supérieure, le fût 25 est obturé par un opercule 84, qui est maintenu espacé axialement de la bague 81 par un segment de tube 85. Deux anneaux 86 et 87, du genre "circlip" assurent la cohésion de l'ensemble des éléments 23-25, 74-76 et 81-85.

Le timon de manoeuvre 8 de la figure 1 est attaché au fût cylindrique 25 par des moyens non montrés, pour permettre l'orientation de la roue motrice directrice 6 en faisant tourner le fût cylindrique 25.

Les boîtiers 46 dans lesquels les pivots 45 des chapes 4 des deux roues avant 2 sont montés à rotation, sont formés par des appendices de la traverse 26 s'étendant verticalement vers le bas à partir des extrémités de celles-ci. Comme montré dans la partie gauche de la figure 9, chaque appendice 46 comporte, dans sa partie inférieure, une cavité cylindrique 88, d'axe vertical, ouverte vers le bas. Le pivot 45 de la roue avant 2 est monté à rotation dans la cavité 88 par l'intermédiaire de deux coussinets ou bagues anti-friction 89. La partie du pivot 45 qui se trouve entre les deux coussinets 89 a un diamètre extérieur réduit de manière à former une gorge circulaire 91. Une cheville de retenue 92 engagée dans des trous alignés 93 de l'appendice 46 et dans la gorge 91 empêche le pivot 45 de sortir de la cavité 88.

Dans le fond de la cavité 88 est percé un trou 94, également d'axe vertical et ayant un diamètre plus petit que celui de la cavité 88. Une tige 95 est engagée dans le trou 94 et peut coulisser librement dans celui-ci. A l'extrémité inférieure de la tige 95 est fixé un disque 96 qui prend appui sur l'extrémité supérieure du pivot 45 par l'intermédiaire d'une bille 97. Le ressort 51 est interposé entre le disque 96 et le fond de la cavité 88. Le ressort 51 peut être par exemple constitué par un empilage de rondelles tronconiques du genre rondelles "Belleville". Quand le chariot de manutention 10 est à vide, l'extrémité supérieure de la tige 95 se trouve à proximité immédiate d'un galet 98 monté à l'extrémité libre du levier de manoeuvre 99 du contacteur 47, dont le boîtier 48 est fixé à la traverse 26.

Dans ce qui précède, le dispositif détecteur de charge était constitué par un ou deux contacteurs 47, 47' disposés entre le châssis (la traverse 26) et un élément (le pivot 45 ou la tige 94 ou le pivot 22) qui se trouve à une distance verticale fixe par rapport au sol, de telle façon que le contacteur 47 soit fermé et autorise le fonctionnement du moyen d'actionnement (vérin hydraulique 9) prévu pour augmenter la pression d'application de la roue motrice et directrice 6 sur le sol, quand la traverse 26 occupe une position relativement basse par rapport audit élément 45 ou 94 ou 22, et de telle façon que le contacteur 47 soit ouvert et empêche ou fait cesser le fonctionnement dudit moyen d'actionnement 9 quand la traverse 26 occupe une position relativement plus haute que la position susmentionnée par rapport audit élément 45 ou 94 ou 22.

Il va cependant de soi que le détecteur de charge peut être réalisé autrement que par un contacteur, par exemple par un capteur sensible à une pression ou à une force de compression, telle qu'une jauge de contrainte, un capteur piézo-électrique, etc., qui produit un signal électrique dont la valeur dépend de la valeur de la pression ou de la force de compression à laquelle il est soumis, et qui est associé à un moyen de commutation pouvant être commandé directement ou après un traitement approprié par le signal électrique produit par ledit capteur.

La figure 10 montre, à titre d'exemple, un schéma électrique incluant un capteur sensible à la pression. Le capteur 101 est connecté à l'une des deux entrées d'un comparateur 102, dont l'autre entrée est connectée à une source de tension de référence ajustable 103. La sortie du comparateur 102 est connectée, à travers un circuit d'adaptation et d'amplification 104 à l'entrée de commande d'un moyen de commutation 105 connecté en série avec le moteur électrique 33 d'entraînement de la pompe 32, à la place du contacteur 47 précédemment décrit. Le moyen de commutation 105 peut être par exemple un relais électromagnétique, un transistor, une diac, une triac, etc.

Le capteur 101 peut être par exemple disposé à la place du ressort 51 entre le disque 96 et le fond de la cavité 88, la tige 95 et le contacteur 47 étant alors supprimés, mais le trou 94 pouvant être conservé pour le passage des conducteurs de raccordement électrique du capteur 101. La tension de référence produite par la source 103 est par exemple ajustée de telle façon que le comparateur 102 produise sur sa sortie un signal ayant une première valeur telle que le moyen de commutation 105 est fermé quand la résultante des forces appliquées à la traverse 26, dirigée de haut en bas, est plus grande qu'une valeur prédéterminée, et que le comparateur 102 produit sur sa sortie un signal ayant une seconde valeur telle que le moyen de commutation 105 est ouvert quand ladite résultante des forces appliquées à la traverse 26, dirigée de haut en bas, est plus faible que ladite valeur prédéterminée. De cette manière, en aucun cas les deux roues 2 ne peuvent être soulevées au-dessus du sol lorsqu'un fluide hydraulique sous pression est envoyé dans la chambre 31 du vérin 9. Pour le reste, le schéma de la figure 10 est semblable à celui de la figure 5. Il va cependant de soi que dans les figures 6 et 8, les contacteurs 47 pourraient être remplacés par un moyen de commutation tel que le moyen de commutation 105 de la figure 10, commandé de la même manière par un capteur 101 sensible à une pression.

Il est du reste bien entendu que les formes d'exécution de la présente invention qui ont été décrites ci-dessus ont été données à titre d'exemple purement indicatif et nullement limitatif, et que de nombreuses modifications peuvent être facilement apportées par l'homme de l'art sans pour autant sortir du cadre de la présente invention.

## Revendications

1. Chariot de manutention comprenant un châssis (1) équipé de quatre roues de sustentation (2, 3) et d'une roue motrice et directrice (6), qui est située sensiblement entre deux (2) des quatre roues de sustentation, lesquelles sont montées par rapport au châssis (1) pratiquement sans suspension élastique, tandis qu'entre la roue directrice et motrice (6) et le châssis (1) est prévue une suspension élastique (28; 43), qui presse ladite roue directrice et motrice (6) sur le sol avec une force élastique prédéterminée et qui inclut un moyen d'actionnement (9) apte, lorsqu'il est actionné, à modifier ladite force élastique, le fonctionnement dudit moyen d'actionnement (9) étant en rapport avec un dispositif détecteur de charge, caractérisé en ce que ledit dispositif détecteur de charge (47 ; 101, 105) est disposé entre le châssis (1) et un élément (22 ; 45 ; 94) qui est lié à l'une des trois roues, à savoir la roue motrice et directrice (6) et les deux roues (2) situées de part et d'autre de celle-ci, et qui se trouve à une distance verticale fixe par rapport au sol, de telle façon que le dispositif détecteur de charge détecte la fraction du poids de la charge qui est rapportée sur les roues (2) situées de part et d'autre de la roue motrice et directrice (6), et qu'il autorise le fonctionnement du moyen d'actionnement (9) quand ladite fraction du poids de la charge est plus grande qu'une valeur prédéterminée, et l'interdit ou le fait cesser quand ladite fraction du poids de la charge est ou devient plus petite que ladite valeur prédéterminée.

2. Chariot de manutention selon la revendication 1, dans lequel le moyen d'actionnement (9) comprend un vérin hydraulique pouvant être alimenté en fluide hydraulique à partir d'une pompe hydraulique (32) reliée mécaniquement à un moteur électrique (33), caractérisé en ce que ledit dispositif de détecteur de charge (47 ; 101, 105) comprend un moyen de commutation (47 ; 105) connecté électriquement dans le circuit d'alimentation en courant du moteur électrique (33).

3. Chariot de manutention selon la revendication 1, dans lequel le châssis (1) comprend un châssis principal (11) et un châssis auxiliaire (12), qui est capable de recevoir une charge à manutentionner et qui est monté verticalement mobile par rapport au châssis principal, un premier vérin hydraulique (15) étant monté entre le châssis principal (11) et le châssis auxiliaire (12) pour déplacer ce dernier verticalement, ledit premier vérin (15) pouvant être alimenté en fluide hydraulique à partir d'un pompe hydraulique (32) reliée mécaniquement à un moteur électrique (33), et dans lequel ledit moyen d'actionnement (9) comprend un second vérin hydraulique pouvant être alimenté en fluide hydraulique à partir de ladite pompe hydraulique (32), caractérisé en ce que ledit dispositif détecteur de charge (47 ; 101, 105) comprend un moyen de commutation (47 ; 105) connecté électriquement dans le circuit d'alimentation en courant d'une électrovanne (69, 71) branchée hydrauliquement entre la pompe (32) et le second vérin hydraulique (9).

4. Chariot de manutention selon la revendication 2 ou 3, caractérisé en ce qu'un ressort (51) de faible débattement dans le sens vertical est interposé entre le châssis (1, 26) et l'élément (22 ; 45 ; 94) situé à une distance verticale fixe par rapport au sol, et en ce que ledit moyen de commutation est un contacteur (47), dont le boîtier (48) est fixé au châssis (1, 26) et dont l'organe de manoeuvre (99) est relié fonctionnellement audit élément (45 ; 94), de telle façon que ledit contacteur (47) est ouvert quand le ressort (51) n'est pas comprimé, et fermé quand ledit ressort est comprimé.

5. Chariot de manutention selon la revendication 2 ou 3, caractérisé en ce que ledit moyen de commutation (105) est d'un type pouvant être commandé par un signal électrique, et en ce que ledit dispositif détecteur de charge (101, 105) comprend en outre un capteur (101) sensible à une pression, qui est interposé entre le châssis (1, 26) et ledit élément (22, 45) situé à une distance verticale fixe par rapport au sol, et qui produit un signal électrique utilisé pour commander ledit moyen de commutation (105).

6. Chariot de manutention selon la revendication 5, caractérisé en ce que le capteur (101) est relié électriquement à l'une des deux entrées d'un comparateur (102), dont l'autre entrée est connectée à une source de tension de référence ajustable (103), et dont la sortie est reliée à une entrée de commande dudit moyen de commutation (105).

7. Chariot de manutention selon l'une quelconque des revendications 1 à 6, caractérisé en ce que le dispositif détecteur de charge (47 ; 101, 105) est associé à l'une des deux roues (2) qui sont situées de part et d'autre de la roue motrice et directrice (6).

8. Chariot de manutention selon l'une quelconque des revendications 1 à 6, caractérisé en ce qu'il est prévu deux dispositifs détecteurs de charge (47 ; 101, 105), qui sont associés respectivement aux deux roues (2) qui sont situées de part et d'autre de la roue motrice et directrice (6).

9. Chariot de manutention selon la revendication 8, rattachée à la revendication 2 ou 3, caractérisé en ce que les deux moyens de commutation (47, 47' ; 105) qui font respectivement partie des deux dispositifs détecteurs de charge, sont connectés électriquement en série dans ledit circuit d'alimentation en courant.

10. Chariot de manutention selon l'une quelconque des revendications 1 à 6, caractérisé en ce que ledit dispositif détecteur de charge (47 ; 101, 105) est associé à la roue motrice et directrice (6).

**Patentansprüche**

1. Transportwagen, der ein Chassis (1) aufweist, das mit vier Stützrädern (2, 3) und einem Antriebs- und Lenkrad (6) ausgestattet ist, das ungefähr zwischen zweien (2) der vier Stützräder angeordnet ist, die in bezug auf das Chassis (1) praktisch ohne elastische Aufhängung befestigt sind, während zwischen dem Antriebs- und Lenkrad (6) und dem Chassis (1) eine elastische Aufhängung (28 ; 43) vorgesehen ist, die das Antriebs- und Lenkrad (6) mit einer elastischen vorbestimmten Kraft auf den Boden drückt und die ein geeignetes Betätigungsmittel (9) aufweist, um, wenn es betätigt ist, die elastische Kraft zu ändern, wobei das Wirken des Betätigungsmittels (9) im Zusammenhang mit einer Lastfühleranordnung steht, dadurch gekennzeichnet, daß die Lastfühleranordnung (47 ; 101, 105) zwischen dem Chassis (1) und einem Element (22 ; 45 ; 94) angeordnet ist, das mit einem von drei Rädern verknüpft ist, nämlich dem Antriebs- und Lenkrad (6) und den zwei Rädern (2), die auf der einen Seite und der anderen Seite desselben angeordnet sind, und das sich in bezug zum Boden in einem festen vertikalen Abstand in der Weise befindet, daß die Lastfühleranordnung den Bruchteil des Gewichts der Last detektiert, der auf die Räder (2) übertragen wird, die auf der einen Seite und der anderen Seite des Antriebs- und Lenkrades (6) angeordnet sind, und daß sie das Wirken des Betätigungsmittels (9) zuläßt, wenn der Bruchteil des Gewichts der Last größer ist als ein vorbestimmter Wert, und es verhindert oder es beendet, wenn der Bruchteil des Gewichts der Last kleiner ist oder wird als der vorbestimmte Wert.

2. Transportwagen nach Anspruch 1, in dem das Betätigungsmittel (9) einen hydraulischen Zylinder aufweist, der mit Hydraulikfluid von einer Hydraulikpumpe (32) gespeist wird, die mechanisch mit einem Elektromotor (33) verbunden ist, dadurch gekennzeichnet, daß die Lastfühleranordnung (47 ; 101, 105) ein Umschaltmittel (47 ; 105) aufweist, das elektrisch im Stromversorgungskreis des Elektromotors (33) verbunden ist.

3. Transportwagen nach Anspruch 1, in dem das Chassis (1) ein Hauptchassis (11) und ein Hilfschassis (12) aufweist, das eine zu transportierende Last aufnehmen kann und das in bezug auf das Hauptchassis vertikal beweglich befestigt ist, wobei ein erster hydraulischer Zylinder (15) zwischen dem Hauptchassis (11) und dem Hilfschassis (12) angeordnet ist, um dasselbe vertikal zu verschieben, wobei der erste Zylinder (15) mit Hydraulikfluid von einer Hydraulikpumpe (32) gespeist werden kann, die mechanisch mit einem Elektromotor (33) verbunden ist, und in dem das Betätigungsmittel (9) einen zweiten hydraulischen Zylinder aufweist, der mit Hydraulikfluid von der genannten Hydraulikpumpe (32) gespeist werden kann, dadurch gekennzeichnet, daß die Lastfühleranordnung (47 ; 101, 105) ein Umschaltmittel (47 ; 105) aufweist, das elektrisch im Stromversorgungskreis eines Elektroventils (69, 71) verbunden ist, das zwischen der Pumpe (32) und dem zweiten Hydraulikzylinder (9) eingeschaltet ist.

4. Transportwagen nach Anspruch 2 oder 3, dadurch gekennzeichnet, daß eine Feder (51) mit kleinem Ausfederungsweg in Vertikalrichtung zwischen dem Chassis (1, 26) und dem Element (22 ; 45 ; 94), das in bezug auf den Boden einen festen vertikalen Abstand hat, angeordnet ist, und daß das Umschaltmittel ein Schalter (47) ist, von dem das Gehäuse (46) am Chassis (1, 26) befestigt ist und von dem das Betätigungsorgan (99) funktionsmäßig mit dem Element (45 ; 94) in der Weise verbunden ist, daß der Schalter (47) offen, wenn die Feder (51) nicht zusammengedrückt ist, und geschlossen ist, wenn die Feder zusammengedrückt ist.

5. Transportwagen nach Anspruch 2 oder 3, dadurch gekennzeichnet, daß das Umschaltmittel (105) von einem Typ ist, der durch ein elektrisches Signal betätigt werden kann, und daß die Lastfühleranordnung (101, 105) außerdem einen auf einen Druck empfindlichen Meßgrößenaufnehmer (101) aufweist, der zwischen dem Chassis (1, 26) und dem in bezug auf den Boden in einem festen vertikalen Abstand angeordneten Element (22, 45) angeordnet ist, und der ein elektrisches Signal erzeugt, das zum Betätigen des Umschaltmittels (105) verwendet wird.

6. Transportwagen nach Anspruch 5, dadurch gekennzeichnet, daß der Meßgrößenaufnehmer (101) elektrisch mit einem der beiden Eingänge eines Komparators (102) verbunden ist, dessen anderer Eingang mit einer einstellbaren Bezugsspannungsquelle (103) verbunden ist, und von dem der Ausgang mit einem Betätigungseingang des Umschaltmittels (105) verbunden ist.

7. Transportwagen nach einem der Ansprüche 1 bis 6, dadurch gekennzeichnet, daß die Lastfühleranordnung (47 ; 101, 105) mit einem der beiden Räder (2) verknüpft ist, die auf der einen Seite und der anderen Seite des Antriebs- und Lenkrades (6) angeordnet sind.

8. Transportwagen nach einem der Ansprüche 1 bis 6, dadurch gekennzeichnet, daß zwei Lastfühlerdetektoren (47 ; 101, 105) vorgesehen sind, die mit den beiden Rädern (2) verknüpft sind, die auf der einen Seite und der anderen Seite des Antriebs- und Lenkrades (6) angeordnet sind.

9. Transportwagen nach Anspruch 8 im Zusammenhang mit den Ansprüchen 2 oder 3, dadurch gekennzeichnet, daß die beiden Schaltmittel (47, 47' ; 105), die Teile der beiden Lastfühleranordnungen bilden, elektrisch in Reihe in der Stromversorgungsschaltung verbunden sind.

10. Transportwagen nach einem der Ansprüche 1 bis 6, dadurch gekennzeichnet, daß die Lastfühleranordnung (47 ; 101, 105) mit dem Antriebs- und Lenkrad (6) verknüpft ist.

## Claims

1. Handling trolley comprising a chassis (1) equipped with four support wheels (2, 3) and one front, driving wheel (6), which is located essentially between two (2) of the four support wheels, which are mounted with respect to the chassis (1) substantially without any elastic suspension, whereas an elastic suspension (28, 43) is provided between the front, driving wheel (6) and the chassis (1) and which presses the wheel (6) onto the ground with a predetermined elastic force and which includes an operating means (9) which, when it is operated, is able to modify the said elastic force, the operation of said operating means (9) being in relation with a load detecting device, characterized in that the said load detecting device (47 ; 101, 105) is placed between the chassis (1) and a member (22, 45, 94), which is connected to one of the three wheels, namely the front, driving wheel (6) and the two wheels (2) located on either side thereof and which is at a fixed vertical distance with respect to the ground, so that the load detecting device detects the fraction of the weight of the load which is applied to the wheels (2) located on either side of the front, driving wheel (6) and which authorizes the operation of the operating means (9) when said load weight fraction is greater than a predetermined value and prevents or stops it when said load weight fraction is or becomes smaller than said predetermined value.

2. Handling trolley according to claim 1, in which the operating means (9) has a hydraulic jack which can be supplied with hydraulic fluid from a hydraulic pump (32) mechanically connected to an electric motor (33), characterized in that said load detecting device (47 ; 101, 105) has a switching means (47 ; 105) electrically connected into the power supply circuit of the electric motor (33).

3. Handling trolley according to claim 1, in which the chassis (1) has a main chassis (11) and an auxiliary chassis (12), which is able to receive a load to be handled and which is fitted so as to be vertically movable with respect to the main chassis, a first hydraulic jack (15) being fitted between the main chassis (11) and the auxiliary chassis (12) in order to vertically move the latter, said first jack (15) being suppliable with hydraulic fluid from a hydraulic pump (32) mechanically connected to an electric motor (33) and in which said operating means (9) has a second hydraulic jack, which can be supplied with hydraulic fluid from the said hydraulic pump (32), characterized in that the load detecting device (47 ; 101, 105) has a switching means (47 ; 105) electrically connected into the power supply circuit of an electrovalve (69, 71) hydraulically connected between the pump (32) and the second hydraulic jack (9).

4. Handling trolley according to claims 2 or 3, characterized in that a spring (51) having a limited travel in the vertical direction is interposed between the chassis (1, 26) and the member (22, 45, 94) located at a fixed vertical distance with respect to the ground and in that said switching means is a contactor (47), whereof the case (48) is fixed to the chassis (1, 26) and whereof the manipulating member (99) is functionally connected to the said member (45, 94) in such a way that the said contactor (47) is open when the spring (51) is not compressed and closed when said spring is compressed.

5. Handling trolley according to claims 2 or 3, characterized in that the said switching means (105) is of a type which can be controlled by an electric signal and in that said load detecting device (101, 105) also has a sensor (101) sensitive to a pressure, which is interposed between the chassis (1, 26) and the member (22, 45) located at a fixed vertical distance relative to the ground and which produces an electric signal used for controlling said switching means (105).

6. Handling trolley according to claim 5, characterized in that the sensor (101) is electrically connected to one of the two inputs of a comparator (102), whereof the other input is connected to an adjustable reference voltage supply (103) and whose output is connected to a control input of said switching means (105).

7. Handling trolley according to any one of the claims 1 to 6, characterized in that the load detecting device (47 ; 101, 105) is associated with one of the two wheels (2), which are located on either side of the front, driving wheel (6).

8. Handling trolley according to any one of the claims 1 to 6, characterized in that there are two load detecting devices (47 ; 101, 105), which are respectively associated with the two wheels (2) located on either side of the front, driving wheel (6).

9. Handling trolley according to claim 8, dependent on claim 2 or 3, characterized in that the two switching means (47, 47' ; 105), which respectively form part of the two load detecting devices are electrically connected in series in said power supply circuit.

10. Handling trolley according to any one of the claims 1 to 6, characterized in that said load detecting device (47 ; 101, 105) is associated with the front, driving wheel (6).

FIG_3

FIG_1

EP 0 329 504 B1

FIG.2

FIG.4

FIG.5

# FIG_6

# FIG_8

# FIG_7

EP 0 329 504 B1

## FIG.9

## FIG.10